# EUROPÄISCHE PATENTSCHRIFT

(11) **EP 1 347 388 B1**
(45) Veröffentlichungstag und Bekanntmachung des Hinweises auf die Patenterteilung: **07.05.2008**
(21) Anmeldenummer: 03003435.9
(22) Anmeldetag: 14.02.2003
(51) Int. Cl.: G06F 13/40, H01R 9/00

(54) **Kopplungsvorrichtung zum Anschliessen von Geräten an ein Bussystem**
Coupling device for connecting devices to a bus system
Dispositif de couplage pour connecter des appareils à un bus

(30) Priorität: 18.03.2002 DE 10211938
(43) Veröffentlichungstag der Anmeldung: 24.09.2003
(73) Patentinhaber: SICK AG, 79183 Waldkirch (DE)
(72) Erfinder: Dold, Franz Josef, 78120 Furtwangen (DE); Brunsch, Sebastian, 77972 Mahlberg (DE); Koepcke, Oliver, 79395 Neuenburg (DE)
(74) Vertreter: Manitz, Finsterwald & Partner GbR

(56) Entgegenhaltungen:
- DE-A- 4 417 423
- DE-A- 19 756 167
- DE-U- 29 919 901
- US-A- 4 972 470

## Beschreibung

Die vorliegende Erfindung betrifft eine Kopplungsvorrichtung zum Anschließen von Geräten wie beispielsweise Sensoren, Aktoren, berührungslos wirkende Schutzeinrichtungen (BWS), Lichtschranken oder Steuerungen an ein Bussystem nach dem Oberbegriff des Anspruchs 1.

Kopplungsvorrichtungen dieser Art werden sowohl zum Anschließen von Geräten an normale Bussysteme als auch an Sicherheitsbussysteme verwendet. So existieren beispielsweise IP 20 - Feldbusanschaltungen (Anschalteinheiten), welche sowohl den Anschluss von passiven Sicherheitsschaltern als auch von aktiven Sicherheitslichtschranken an Sicherheitsbussysteme basierend auf Standard-Feldbusprotokollen ermöglichen.

Die Lösungsansätze für die Anschaltung der einzelnen Geräte an das Bussystem basiert bei der Schutzklasse IP 20 meist darauf, dass getrennte Kontaktelemente mit folgenden Funktionseigenschaften (Belegungen) zur Verfügung stehen:
- statische Versorgungsspannung (üblicherweise 24 Volt)
- Potential Masse (GND)
- Signaleingang 1 (IN1)
- Signaleingang 2 (IN2)
- Testausgang 1 (TOUT1)
- Testausgang 2 (TOUT2)
- Funktionserde (FE)

Mit einer derart belegten Kopplungsvorrichtung ist die Anschaltung der drei wichtigsten Arten von Signalgebern, nämlich Sicherheitsschalter, Sicherheitslichtschranke und Standard-Sensor, an ein Sicherheitsbussystem möglich, wobei die Kopplungsvorrichtungen in allen drei Fällen identisch ausgebildet sein können. Falls diese Arten von Signalgeber in der Schutzklasse IP 67 angeschlossen werden sollen, so müssen aufgrund der geltenden Vorschriften mindestens folgende industriell standardisierte Steckverbinder verwendet werden:
- IP 67 M12 8-polig
- IP 67 M18 8-polig
- IP 67 M23 12-polig

Der Einsatz dieser industriell standardisierten Steckverbinder bringt jedoch folgende Probleme mit sich. Zum einen sind grundsätzlich diese drei genannten Steckverbindungen keine handelsüblichen Steckverbindungen für Standard-Sensoren, für die üblicherweise IP 67 M12 5-polig eingesetzt wird. Somit ist ein Anschluss von Standard-Sensoren nicht ohne weiteres möglich.

Zum anderen kann ein Steckverbinder gemäß IP 67 M12 8-polig durch zu kleine Adernquerschnitte nur begrenzte Ströme führen. Diese Maximalströme sind für bestimmte Signalgeber nicht ausreichend. Ein weiterer Nachteil besteht darin, dass die genannten drei Steckverbindungen nicht selbständig durch den Anwender konfektionierbar sind, so dass dieser vorkonfektionierte Kabel verwenden muss, was die Flexibilität bei der Installation vor Ort eingrenzt und die Kosten erhöht.

Die Steckverbinder IP 67 M18 und IP 67 M23 besitzen demgegenüber zu große Abmessungen und führen zu höheren Steckverbinderkosten am Signalgeber sowie an der Anschalteinheit.

Aus der US 4,972,470 ist eine Kopplungsvorrichtung zum Anschließen von externen Geräten an einen Computer beschrieben. Die Kopplungsvorrichtung besitzt dabei eine als Steckverbindung ausgebildete Schnittstelle, bei der die Kontaktelemente des Steckverbinders über einen Mikrocontroller in ihrer Funktion programmierbar sind.

Aus der DE 299 19 901 U1 ist eine Kopplungsvorrichtung zum Verbinden von Aktoren und/oder Sensoren mit einer Steuerungseinheit beschrieben, die eine Vielzahl von Anschlüssen aufweist, wobei wenigstens einer der Anschlüsse als Multifunktionsschnittstelle ausgelegt ist.

Es ist eine Aufgabe der vorliegenden Erfindung eine Kopplungsvorrichtung der eingangs genannten Art so auszubilden, dass eine flexible Anschaltung von Sicherheits- und Standard-Sensoren mit standardisierten, kostengünstigen Steckverbindungen durchgeführt werden kann. Insbesondere soll das flexible Anschalten für Sensoren der Schutzklasse IP 67 möglich sein. Weiterhin sollen insbesondere die Anforderungen der sicherheitsgerichteten Integration von Sicherheitskomponenten nach Sicherheitskategorie 4 (EN 954) erfüllt werden.

Ausgehend von einer Kopplungsvorrichtung der eingangs genannten Art wird diese Aufgabe erfindungsgemäß durch die Merkmale des Anspruchs 1 gelöst.

Gegenüber den bekannten Kopplungsvorrichtungen, bei denen jedes der Kontaktelemente eine fest vorgegebene, unveränderbare vordefinierte Funktionseigenschaft besitzt, ist bei der erfindungsgemäßen Kopplungsvorrichtung somit eine Variabilität der Funktionseigenschaften der einzelnen Kontaktelemente, d. h. eine Parametrisierung deren Funktion, möglich. Auf diese Weise wird erreicht, dass für die im Betrieb üblicherweise eingesetzten Geräte Kopplungsvorrichtungen mit einer geringeren Anzahl von Kontaktelementen verwendet werden können. Zusätzlich können Ein-und Ausgänge eingespart werden und es entsteht eine erhöhte Flexibilität für den Anwender, da dieser selbsttätig die erfindungsgemäßen Kopplungsvorrichtungen so umparametrieren kann, dass der Anschluss der gewünschten Geräte ermöglicht wird.

Letztlich ist auch die Verwendung von bereits bestehenden Gehäusen und Anschluss-Steckverbindern bei existierenden Bussystem bzw. Geräten möglich. Eine kostengünstige Standard-Steckverbindung, die gemäß der Erfindung Verwendung finden kann, ist beispielsweise ein Steckverbinder gemäß Schutzklasse IP 67 M12 5-polig.

Nach einer vorteilhaften Ausführungsform der Erfindung ist ein Teil der Kontaktelemente als feste Kontaktelemente ausgebildet, die jeweils fest mit je einer vorgegebenen Funktionseigenschaft belegt sind, während die restlichen Kontaktelemente jeweils variabel mit je einer Funktionseigenschaft belegbar sind. Durch die feste Belegung einzelner Kontaktelemente kann der Hardware- und Softwareaufwand bei der Entwicklung und Herstellung der Kopplungsvorrichtungen reduziert werden. Dabei ist lediglich zu beachten, dass eine ausreichende Anzahl von Kontaktelementen als variable Kontaktelemente ausgebildet ist, um die benötigte Flexibilität zum Anschließen der unterschiedlichen Geräte gewährleisten zu können.

Mit der Erfindung ist es möglich, dass zumindest ein Teil der variablen Kontaktelemente jeweils mit der gleichen Funktionseigenschaft belegbar ist oder dass zumindest einige der variablen Kontaktelemente mit voneinander verschiedenen Funktionseigenschaften belegbar sind. Die jeweils gewünschte Konfiguration ist dabei von der Applikation abhängig.

Die Anzahl der geräteseitigen Kontaktelemente m kann größer, gleich oder kleiner als die Anzahl der vordefinierten Funktionseigenschaften n sein. Auch hier hängt die Wahl der entsprechenden Anzahl lediglich von der gewünschten Applikation ab.

Vorteilhaft sind die vordefinierten Funktionseigenschaften aus folgenden Eigenschaften wählbar: statische Versorgungsspannung (positiv oder negativ), Masse (GND), Signaleingang, Testausgang, Funktionserde, Schaltausgang, Signaleingang mit Pull-up-Widerstand, Signaleingang mit Pull-down-Widerstand, null Volt und keine Funktion. Mit diesen vordefinierten Funktionseigenschaften sind alle wesentlichen Kombinationen für die variablen Kontaktelemente vorgebbar, so dass die im üblichen Betrieb eingesetzten Geräte über die erfindungsgemäße Kopplungsvorrichtung an jedem Bussystem angeschlossen werden können.

Nach einer vorteilhaften Ausführungsform der Erfindung ist eines der Kontaktelemente als Gehäuseteil der geräteseitigen Anschlusseinheit ausgebildet. Dadurch ist es möglich, die eigentliche Pin-Anzahl des verwendeten Kopplungssteckers weiter zu reduzieren. Werden beispielsweise sechs Kontaktelemente benötigt, so kann ein Standard-Steckverbinder gemäß Schutzklasse IP 67 M12 5-polig verwendet werden, bei dem das Gehäuse als sechstes Kontaktelement eingesetzt wird.

Bevorzugt ist die Kopplungsvorrichtung zum Anschluss von sicheren an ein sicheres Bussystem (Sicherheitsbussystem) ausgebildet.

Nach einer weiteren vorteilhaften Ausführungsform der Erfindung ist der Gehäusekontakt fest mit Funktionserde belegt. Grundsätzlich ist es jedoch auch möglich, dass bei einer ausreichenden Anzahl von Kontaktelementen Funktionserde nicht auf den Gehäusekontakt, sondern auf einen separaten Kontaktpin gelegt wird.

Nach einer weiteren vorteilhaften Ausführungsform der Erfindung ist ein festes Kontaktelement als erster Signaleingang (IN1), ein festes Kontaktelement als zweiter Signaleingang (IN2) und ein festes Kontaktelement als Masse (GND) fest eingestellt, während zwei variable Kontaktelemente jeweils variabel als erster oder zweiter Testausgang (TOUT1, TOUT2) einstellbar oder mit statischer Versorgungsspannung oder mit null Volt belegbar sind. Bei dieser Ausführungsform sind somit zwei variable Kontaktelemente vorgesehen, die wahlweise als Testausgänge mit Testsequenzen verwendbar sind oder statisch auf Versorgungsspannung (beispielsweise 24 Volt oder null Volt) gelegt werden können. Mit dieser Ausführungsform der erfindungsgemäßen Kopplungsvorrichtung ist das Anschließen von Sicherheitsschaltern, von Sicherheitslichtschranken sowie von Standard-Sensoren an ein Sicherheitsbussystem mit einem standardisierten Steckverbinder IP 67 M12 5-polig möglich, wie anhand der Figurenbeschreibung näher erläutert werden wird.

Auch die Realisierung von Kopplungsvorrichtungen mit zweipoligen Sicherheitsausgängen ist mit der erfindungsgemäßen Lösung möglich. Dazu werden in einer bevorzugten Ausführungsform ein festes Kontaktelement als Masse (GND) fest eingestellt, während zumindest ein Teil der übrigen Kontaktelemente als variable Kontaktelemente ausgebildet sind und jeweils zwei der variablen Kontaktelemente als erster und zweiter Testausgang (TOUT1H, TOUT2H) und die beiden anderen variablen Kontaktelemente als jeweils low-aktiver erster und zweiter Schaltausgang (TOUT1L, TOUT2L) einstellbar sind. Dabei ist es in einer alternativen Lösung auch möglich, dass der erste und zweite Testausgang (TOUT1H, TOUT2H) als feste Kontaktelemente ausgeführt sind.

Nach einer weiteren bevorzugten Ausführungsform ist ein festes Kontaktelement fest mit Masse (GND) belegt, während vier variable Kontaktelemente jeweils variabel als beliebige Kombination von Signaleingängen (IN1, IN2) und Schaltausgängen (TOUT1, TOUT2) einstellbar sind. Mit dieser Ausführungsform lassen sich Anschaltungsbeispiele für Sicherheitsschalter und Sicherheitslichtschranken auch mit nur fünf Kontaktelementen (ohne Gehäusekontakt) realisieren, wie anhand der Figurenbeschreibung noch näher ausgeführt werden wird.

Vorteilhaft ist auch eine Lösungsalternative mit antivalenter Anschaltung möglich, wobei ein festes Kontaktelement fest mit Funktionserde (FE), ein festes Kontaktelement mit Masse (GND) und ein festes Kontaktelement mit statischer Versorgungsspannung festgelegt ist, während zwei variable Kontaktelemente jeweils variabel als Signaleingänge mit Pull-up-Widerstand mit Pull-down-Widerstand (IN1-pu, IN2-pu, IN1-pd, IN2-pd) einstellbar sind. Alternativ ist es hierzu auch möglich, dass einer der variablen Signaleingänge durch ein festes Kontaktelement als Signalengang mit Pull-down-Widerstand IN1-pd fest belegt ist. Der Vorteil dieser Variante liegt darin, dass der Anschluss einer berührungslos wirkenden Schutzeinrichtung und eines Sicherheitsschalters an identischen Kontaktelementen erfolgen kann und somit nur vier Kontaktelemente an der Kopplungsvorrichtung erforderlich sind. Daher kann das fünfte Kontaktelement einer 5-poligen Steckverbindung mit Funktionserde belegt werden. Dadurch können die Kosten für eine erfindungsgemäße Kopplungsvorrichtung weiter verringert werden. Allerdings müssten beim Anschluss einer BWS die Signaleingänge dann als Pull-down-Eingänge programmiert werden.

Durch die erfindungsgemäße Kopplungsvorrichtung wird erreicht, dass für die Anschaltung verschiedenster Arten von Standard- und Sicherheitssensoren maximal sechs Kontaktelemente benötigt werden. Damit kann auch die Anschlusstechnik gemäß Schutzklasse IP 67 mit kostengünstigen M12 5-poligen Steckverbindungen (wahlweise mit Funktionserde am Gehäuse) eingesetzt werden.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Figur 1: ein Blockdiagramm eines Bussystems, an das über eine erfindungsgemäße Kopplungsvorrichtung drei unterschiedliche Geräte angeschlossen sind,
- Figuren 2 - 4: schematische Darstellungen einer Kopplungsvorrichtung nach dem Stand der Technik mit verschiedenen Beschaltungen,
- Figur 5: eine schematische Darstellung des Aufbaus einer erfindungsgemäß ausgebildeten Kopplungsvorrichtung und
- Figuren 6 - 15: verschiedene Ausführungsformen einer erfindungsgemäß ausgebildeten Kopplungsvorrichtung mit unterschiedlichen Beschaltungen.

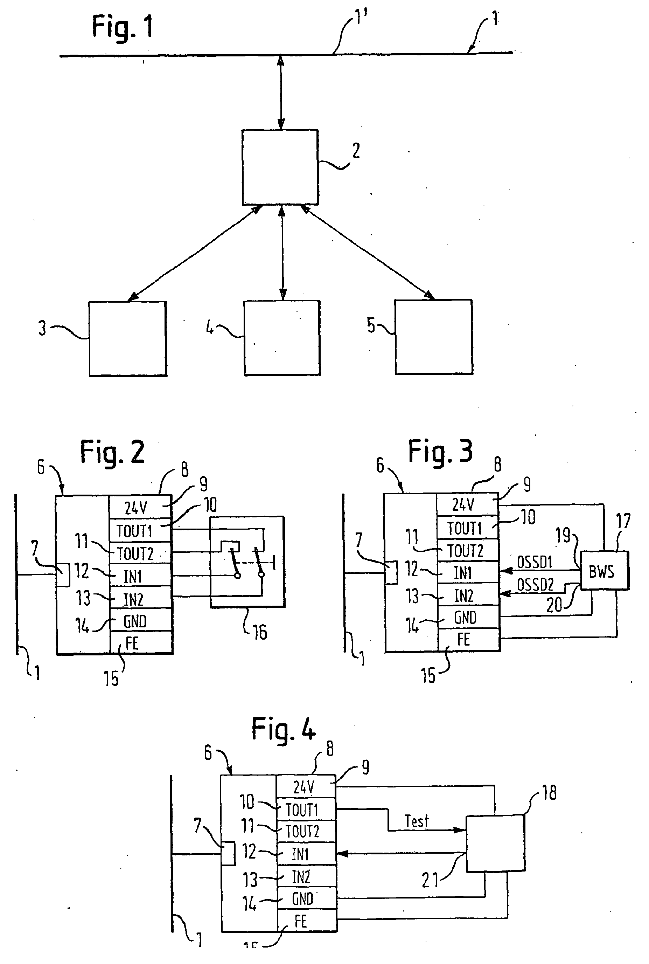

Figur 1 zeigt eine Busleitung 1' eines Bussystems 1, an die eine erfindungsgemäße Kopplungsvorrichtung 2 angeschlossen ist. Über die Kopplungsvorrichtung 2 sind drei unterschiedliche Geräte 3, 4, 5, beispielsweise ein Sicherheitsschalter, eine Sicherheitslichtschranke und ein Standardsensor mit der Busleitung 1'verbunden. Grundsätzlich ist es auch möglich, dass für jedes Gerät 3, 4, 5 eine eigene Kopplungsvorrichtung 2 vorgesehen ist. Durch Verwendung einer Kopplungsvorrichtung 2 für mehrere Geräte 3, 4, 5 können die Kosten des Gesamtsystems jedoch herabgesetzt werden.

In den Figuren 2 bis 4 ist jeweils stark schematisiert eine Kopplungsvorrichtung 6 nach dem Stand der Technik dargestellt, die jeweils über eine busseitige Anschlusseinheit 7 mit einem Bussystem 1 verbunden ist.

Der busseitigen Anschlusseinheit 7 gegenüberliegend ist eine stark schematisierte geräteseitige Anschlusseinheit 8 vorgesehen, die üblicherweise als Steckverbindung ausgebildet ist. Die geräteseitige Anschlusseinheit 8 umfasst dabei sieben Kontaktelemente 9 - 15, die in der Praxis als Kontaktstifte oder Kontaktlöcher eines Anschlusssteckers bzw. einer Anschlussbuchse ausgebildet sind. Eines der Kontaktelemente kann gegebenenfalls auch durch das Gehäuse des Steckers bzw. der Buchse gebildet werden.

Bei den Kopplungsvorrichtungen 6 gemäß dem Stand der Technik nach den Figuren 2 bis 4 ist dabei das Kontaktelement 9 mit Versorgungsspannung (beispielsweise 24 Volt) belegt, das Kontaktelement 10 als Testausgang 1 (TOUT1) ausgebildet, das Kontaktelement 11 als Testausgang 2 (TOUT2) ausgebildet, das Kontaktelement 12 als Signaleingang 1 (IN1) ausgebildet, das Kontaktelement 13 als Signaleingang 2 (IN2) ausgebildet, das Kontaktelement 14 mit Potentialmasse (GND) belegt und das Kontaktelement 15 auf Funktionserde (FE) geschaltet. Diese interne Beschaltung der einzelnen Kontaktelemente 9 bis 15 ist dabei fest und unveränderlich.

Mit der gewählten internen Beschaltung kann eine Kopplungsvorrichtung 6 gemäß dem Stand der Technik zum Anschließen eines Sicherheitsschalters 16 (Figur 2), einer Sicherheitslichtschranke 17 (Figur 3) oder eines testbaren Standardsensors 18 (Figur 4) verwendet werden.

Um gemäß Figur 2 einen passiven bzw. kontaktbehafteten Sicherheitsschalter 16 über die Kopplungsvorrichtung 6 an das Bussystem 1 anschließen zu können, werden folgende Signale benötigt: Signaleingang 1 (IN1), Signaleingang 2 (IN2), Testausgang 1 (TOUT1) und Testausgang 2 (TOUT2). Da gemäß Figur 2 die Kontaktelemente 10 bis 13 mit diesen Funktionseigenschaften belegt sind, ist somit mit der Kopplungsvorrichtung 6 gemäß Figur 2 das Anschließen eines Sicherheitsschalters 16 an das Bussystem 1 möglich.

Um einen Kurzschluss der Signalpfade zu 24 Volt oder GND bzw. einen Querschluss der beiden Signalpfade zu erkennen, müssen über die beiden Testausgänge TOUT1 und TOUT2 zeitlich versetzte Testsequenzen ausgesendet werden. Diese Maßnahmen sind erforderlich, um entsprechende Sicherheitskategorien nach Norm EN 954 zu erreichen.

Gemäß Figur 3 kann mit der gleichen Kopplungsvorrichtung 6 nach dem Stand der Technik auch eine Sicherheitslichtschranke 17 (BWS) an das Bussystem 1 angeschlossen werden. Zum Anschließen der Sicherheitslichtschranke 17 werden dabei folgende Signale bzw. Kontakte benötigt: Spannungsversorgung (24 Volt), Signaleingang 1 (IN1), Signaleingang 2 (IN2), Masse (GND) und Funktionserde (FE). Gemäß Figur 3 sind die Kontaktelemente 9 und 12 bis 15 mit diesen Funktionseigenschaften belegt, so dass der Anschluss der Sicherheitslichtschranke 17 über die Kopplungsvorrichtung 6 an das Bussystem 1 möglich ist.

In diesem Fall sendet die Sicherheitslichtschranke 17 selbständig auf ihren Signalausgängen 19, 20 (OSSD Output Signal Switching Device nach IEC 61496) Testsequenzen aus, um entsprechende Kurz- und Querschlüsse zu erkennen. Grundsätzlich können die gleichen Signaleingänge IN1 und IN2 wie in Figur 2 verwendet werden, wobei lediglich eine Umparametrierung der entsprechenden Auswertungssoftware erforderlich ist.

Bei der Anschaltung eines testbaren Standardsensors 18 gemäß Figur 4 an das Bussystem 1 werden folgende Signale benötigt: Spannungsversorgung (24 Volt), Testausgang 1 (TOUT1), Signaleingang 1 (IN1), Masse (GND) und Funktionserde (FE). Diese Funktionseigenschaften werden gemäß Figur 4 durch die Kontaktelemente 9, 10, 12, 14 und 15 realisiert, so dass mit der Anschaltung gemäß Figur 4 auch der Betrieb eines testbaren Standardsensors möglich ist.

Der Sensor 18 wird dabei über den Testausgang TOUT1 getestet. Der Sensor 18 schaltet dabei bei Testsignal null Volt seinen Ausgang 21 ab, so dass die Funktion des Sensors 18 überprüft werden kann. Das Ausgangssignal des Sensors 18 wird dabei über den Signaleingang IN1 gelesen.

Nachteilig an den in den Figuren 2 bis 4 dargestellten Kopplungsvorrichtungen 6 gemäß dem Stand der Technik ist, das zum Anschluss der drei gezeigten Arten von Signalgebern mit einer einzigen Art von Kopplungsvorrichtung mindestens sieben Kontaktelemente 9 bis 15 vorhanden sein müssen.

Wie bereits beschrieben, ist dies mit Problemen verbunden, da entsprechende industriell standardisierte Steckverbindungen an Standardsensoren nicht üblich sind, nur begrenzte Ströme führen können, vom Anwender nicht selbst konfektionierbar sind und zu große Abmessungen besitzen. Daher ist der Einsatz solcher Steckverbindungen mit erhöhten Kosten verbunden.

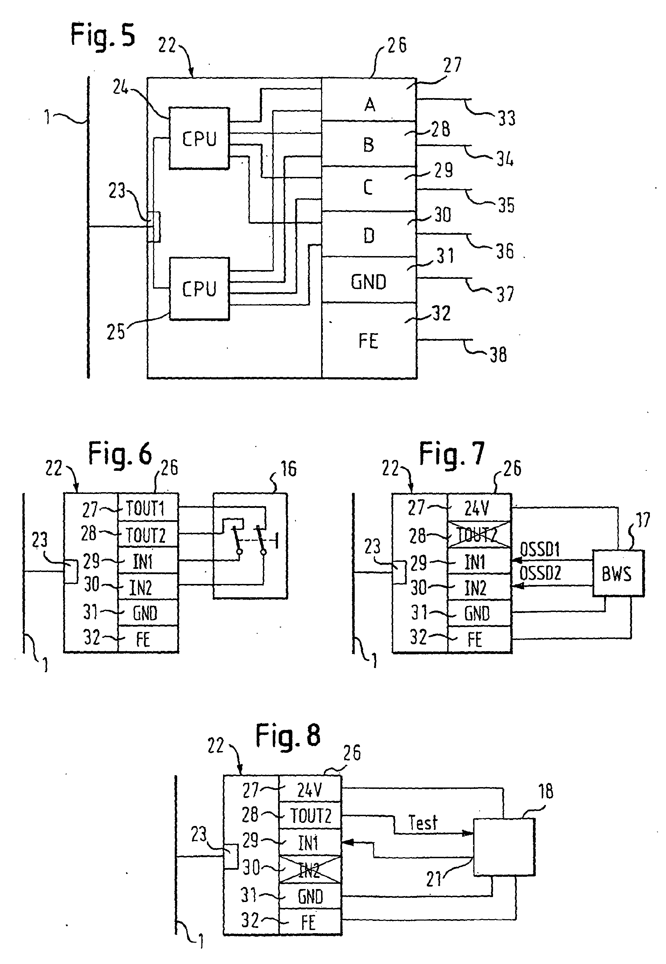

In Figur 5 ist eine erfindungsgemäß ausgebildete Kopplungsvorrichtung 22 stark schematisiert als Blockschaltbild dargestellt. Die Kopplungsvorrichtung 22 umfasste eine busseitige Anschlusseinheit 23, über die sie mit dem Bussystem 1 verbunden ist. Intern ist die busseitige Anschlusseinheit 23 mit zwei als CPUs ausgebildeten internen Steuereinheiten 24, 25 verbunden.

Auf der der busseitigen Anschlusseinheit 23 gegenüberliegenden Seite der Kopplungsvorrichtung 22 ist wiederum eine geräteseitige Anschlusseinheit 26 vorgesehen, die sechs Kontaktelemente 27 bis 32 umfasst. Die Kontaktelemente 27 bis 30 sind dabei als so genannte variable Kontaktelemente ausgebildet, die jeweils intern mit den Steuereinheiten 24, 25 verbunden sind. Über die Steuereinheiten 24, 25 sind jedem der variablen Kontaktelemente 27 bis 30 vorgegebene Funktionseigenschaften A, B, C, D zuweisbar, wobei diese Funktionseigenschaften aus einer vorgegebenen Menge von Funktionseigenschaften auswählbar sind.

Die Kontaktelemente 31 und 32 sind demgegenüber als so genannte feste Kontaktelemente ausgebildet, d. h. diese beiden Kontaktelemente sind mit fest vorgegebenen Funktionseigenschaften, im Beispiel nach Figur 5, mit den Funktionseigenschaften Masse (GND) und Funktionserde (FE) fest belegt.

Jedes der Kontaktelemente 27 bis 32 kann über angedeutete Verbindungsleitungen 33 bis 38 mit entsprechenden Ein- und Ausgängen von Geräten verbunden werden, wie es im Folgenden anhand der Figuren 6 bis 15 näher beschrieben wird.

In Figur 6 ist der Anschluss des Sicherheitsschalters 16 aus Figur 2 an die erfindungsgemäß ausgebildete Kopplungsvorrichtung 22 dargestellt. Um den Sicherheitsschalter 16 anschließen zu können, sind, wie bereits zu Figur 2 erwähnt, die Signale IN1, IN2, TOUT1 und TOUT2 erforderlich. Dementsprechend sind gemäß Figur 6 bei der erfindungsgemäß ausgebildeten Kopplungsvorrichtung 22 die Kontaktelemente 27 bis 30 mit den Funktionseigenschaften TOUT1, TOUT2, IN1 und IN2 durch die Steuereinheiten 24, 25 belegt. Die festen Kontaktelemente 31, 32 werden in diesem Falle nicht benötigt.

Beim Einlesen von entsprechenden Sicherheitsschaltern 16 (taktilen Sensoren, Non-Stop-Schaltern) wird der interne Kontakt des Schalters 16 (Öffner oder Schließer) mit einem Testausgang (TOUT1, Stromquelle) und einem Signaleingang (IN1, Stromsenke) der Kopplungsvorrichtung 22 verbunden. Für eine höhere Sicherheitskategorie wird dies zweikanalig ausgeführt, wie es in Figur 6 dargestellt ist. Die Aufdeckung von Querschlüssen zwischen diesen beiden Kanälen erfolgt dabei über ausgesendete Testpulse, die bei geschlossenem Kontakt über den Eingang zurück gelesen werden. Die Testpulse sind dabei in beiden Kanälen zeitversetzt um die Erkennung von Querschlüssen zu ermöglichen.

Das Auslesen bzw. der Test des Sicherheitsschalters 16 erfolgt somit beim Einsatz einer erfindungsgemäß ausgebildeten Kopplungsvorrichtung identisch zu dem Einsatz einer Kopplungsvorrichtung nach dem Stand der Technik nach Figur 2, so dass seitens des Benutzers hier keine Umstellung erforderlich ist.

Soll anstelle des Sicherheitsschalters 16 die Sicherheitslichtschranke 17 nach Figur 3 an die erfindungsgemäß ausgebildete Kopplungsvorrichtung 22 angeschlossen werden, so ist eine Belegung nach Figur 7 erforderlich.

In diesem Fall wird das Kontaktelement 27 mit Versorgungsspannung (24 Volt), das Kontaktelement 29 mit IN1 und das Kontaktelement 30 mit IN2 belegt.

Der Anschluss der Sicherheitslichtschranke 17 erfolgt dann identisch gemäß dem Anschluss nach Figur 3, wobei durch die variable Zuordnung der einzelnen Funktionseigenschaften an die Kontaktelemente 27 bis 30 gewährleistet ist, dass mit der gezeigten Beschaltung gemäß Figur 7 die gewünschte Funktionalität nach Figur 3 erzielt wird.

Das Kontaktelement 28 wird bei dieser Beschaltung nicht benötigt, so dass hier dieses Kontaktelement 28 entweder mit dem Standardwert TOUT2 oder auch mit einer beliebigen sonstigen Funktionseigenschaft beschaltet sein kann. Es ist ebenfalls möglich, dass das Kontaktelement 28 in diesem Fall nicht beschaltet ist, wie es in Figur 7 durch ein Kreuz dargestellt ist.

Wie gemäß der Beschaltung nach Figur 7 werden die zweikanaligen getesteten Ausgänge OSSD 1 und OSSD2 der Sicherheitslichtschranke 17 mit den beiden Signaleingängen IN1, IN2 verbunden. Die Spannungsversorgung der Sicherheitslichtschranke erfolgt über das Kontaktelement 27 mit beispielsweise 24 Volt. Bei der Verschaltung deckt die Sicherheitslichtschranke 17 Querschlüsse zwischen den beiden Ausgangsleitungen OSSD1 und OSSD2 sowie Kurzschlüsse nach 24 Volt oder Masse (GND) auf.

Figur 8 zeigt die Parametrisierung der erfindungsgemäß ausgebildeten Kopplungsvorrichtung beim Anschluss des Standardsensors 18 aus Figur 4. In diesem Fall wird das Kontaktelement 27 mit Spannungsversorgung (24 Volt), das Kontaktelement 28 mit TOUT2 und das Kontaktelement 29 mit IN1 belegt. Das Kontaktelement 30 ist in diesem Fall nicht erforderlich und kann beispielsweise durch den Standardwert IN2 belegt oder auch unbeschaltet sein, wie es in Figur 8 durch ein Kreuz angedeutet ist.

Die Beschaltung ist identisch zu der in Figur 4 gezeigten Beschaltung, so dass mit der entsprechenden Parametrisierung der Kontaktelemente 27 bis 29 die gleiche Funktionalität wie mit der Kopplungsvorrichtung nach dem Stand der Technik gemäß Figur 4 erreicht wird.

Der Standardsensor 18 erhält über das Kontaktelement 27 seine Spannungsversorgung (24 Volt). Getestet wird der Sensor 18 über den Testausgang TOUT2 (Kontaktelement 28), während der Schaltausgang 21 des Sensors über das Kontaktelement 29 (IN1) eingelesen wird.

Weiterhin können durch die Anschaltung von potentialgebundenen Sensoren, die einen externen Test benötigen, im Zusammenhang mit den dazugehörigen zertifizierten Softwarebausteinen sichere Anschaltungen realisiert werden. Die Bausteine führen dann entsprechende gerätespezifische Tests und Überwachungsalgorithmen durch.

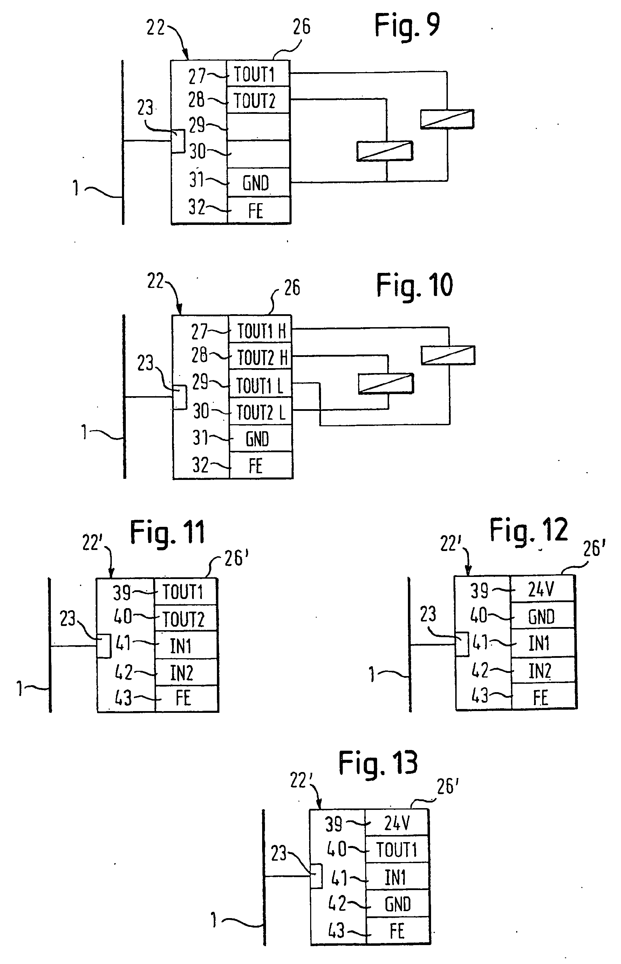

Für zweikanalige Sicherheitsausgänge können gemäß Figur 9 die beiden Kontaktelemente 27 und 28 als selbsttestende sichere Schaltausgänge TOUT1 und TOUT2 ausgeführt werden. Hiermit lässt sich die Sicherheitskategorie 4 nach EN 954 oder SIL 3 nach IEC 62508 erreichen. Falls eine niedrigere Sicherheitskategorie ausreichend ist, kann die Ausprägung auch einkanalig erfolgen.

Die erforderliche Steuerung wird wiederum von den integrierten Steuereinheiten 24 und 25 durchgeführt, welche durch entsprechende über das Bussystem 1 übertragene Ansteuersignale angesteuert werden.

Für die Realisierung von zweipoligen Sicherheitsausgängen können die beiden Kontaktelemente 27, 28 als high-aktive Schaltausgänge TOUT1H und TOUT2H ausgelegt werden, während die beiden Kontaktelemente 29 und 30 als low-aktive Schaltausgänge TOUT1L und TOUT2L parametrisiert werden, wie es in Figur 10 dargestellt ist. Dabei ist noch darauf hinzuweisen, dass in der gesamten Beschreibung Schaltausgänge, die nicht explizit anders bezeichnet sind, grundsätzlich als high-aktive Schaltausgänge zu verstehen sind. Grundsätzlich kann die Erfindung jedoch auch bei Kopplungsvorrichtungen mit low-aktiven Schaltausgängen eingesetzt werden.

Auch bei dieser Verschaltung werden die Kontaktelemente 31 und 32 nicht benötigt, wie es aus Figur 10 zu erkennen ist. Grundsätzlich können diese wiederum, wie in Figur 5 gezeigt, als feste Kontaktelemente ausgebildet sein. Es ist jedoch auch möglich, dass alle Kontaktelemente 27 bis 32 als variable Kontaktelemente ausgebildet sind, und so eine erhöhte Flexibilität zu erhalten.

Bei den Ausführungsformen gemäß den Figuren 6 bis 10 sind jeweils insgesamt sechs Kontaktelemente 27 bis 32 vorhanden. Dabei kann bevorzugt das Kontaktelement 32 als Gehäusekontakt der geräteseitigen Anschlusseinheit 26 ausgebildet sein und dabei insbesondere mit Funktionserde (FE) belegt sein, wie es in den Ausführungsbeispielen auch dargestellt war. Auf diese Weise ist es möglich, kostengünstige 5-polige Steckverbinder zu verwenden, wie es eingangs bereits ausführlich dargelegt wurde.

Die Ausführungsformen gemäß den Figuren 11 bis 15 unterscheiden sich gegenüber den Ausführungsformen nach den Figuren 6 bis 10 darin, dass lediglich fünf Kontaktelemente 39 bis 43 vorgesehen sind. Dementsprechend werden zu diesen Figuren die Kopplungsvorrichtungen mit 22' und die geräteseitigen Anschlusseinheiten mit 26' bezeichnet. Die Figuren 11 bis 15 zeigen weitere mögliche Parametrisierungen der Kontaktelemente 39 bis 43. So sind in Figur 11 beispielsweise die Kontaktelemente 39 und 40 als Testausgänge TOUT1, TOUT2, die Kontaktelemente 41 und 42 als Signaleingänge IN1, IN2 und das Kontaktelement 43 als Funktionserde FE parametrisiert. Grundsätzlich ist es auch möglich, dass das Kontaktelement 43 beispielsweise nicht als variables Kontaktelement, sondern als festes Kontaktelement ausgebildet ist, um so den internen Schaltungsaufwand für die erfindungsgemäße Kopplungsvorrichtung 22' zu verringern. Mit der in Figur 11 gezeigten Belegung ist dann beispielsweise die Verschaltung eines Sicherheitsschalters 16 gemäß Figur 2 möglich.

Wird gemäß Figur 12 eine Parametrisierung vorgenommen, so dass das Kontaktelement 39 mit Spannungsversorgung und das Kontaktelement 40 mit Masse (GND) belegt ist, so kann hingegen an die Kopplungsvorrichtung 22' die Sicherheitslichtschranke 17 gemäß Figur 3 angeschlossen werden.

Bei der Parametrisierung gemäß Figur 13, bei der gegenüber Figur 12 jetzt das Kontaktelement 40 als Testausgang TOUT1 und das Kontaktelement 42 als Masse (GND) belegt ist, ist hingegen der Anschluss des Standardsensors 18 gemäß Figur 4 möglich.

Aus den Figuren 11 bis 13 ist dabei zu erkennen, dass die Funktionserde FE jeweils direkt an das Kontaktelement 43 angeschlossen werden kann, so dass bei dieser Ausführungsform die Verwendung des Gehäusekontaktes nicht erforderlich ist. Dadurch können die Kosten nochmals reduziert werden.

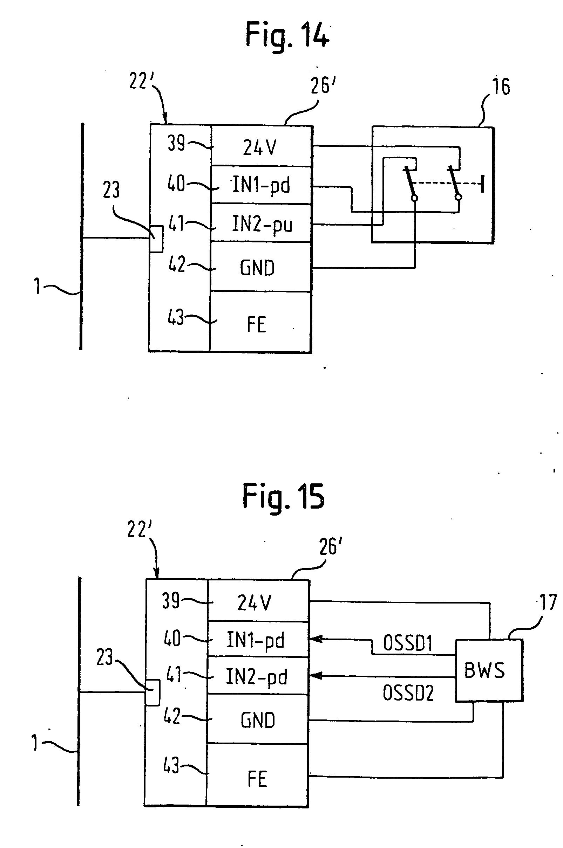

Letztlich ist mit der erfindungsgemäßen Kopplungsvorrichtung auch eine antivalente Anschaltung möglich. Hierzu wird gemäß Figur 14 beispielsweise das Kontaktelement 39 mit Spannungsversorgung, das Kontaktelement 40 mit Signaleingang 1, das Kontaktelement 41 mit Signaleingang 2 und das Kontaktelement 42 mit Masse (GND) belegt. Das Kontaktelement 43 kann wiederum mit Funktionserde entweder fest oder variabel belegt sein. Die Kontaktelemente 40 und 41 sind dabei als Signaleingänge mit internem Pull-down-Widerstand bzw. mit internem Pull-up-Widerstand ausgeführt, wie es durch die Bezeichnungen IN1-pd bzw. IN2-pu gekennzeichnet ist. Bei dieser Variante ist es darüber hinaus möglich, auch die Kontaktelemente 39 und 42 als feste Kontaktelemente mit der gezeigten Belegung auszubilden und nur die Kontaktelemente 40 und 41 als variable Kontaktelemente vorzusehen.

Wie aus Figur 15 zu erkennen ist, ist nämlich der Anschluss der Sicherheitslichtschranke 17 an den identischen Kontaktelementen möglich, so dass wiederum nur vier Kontaktelemente für den eigentlichen Anschluss der Sicherheitslichtschranke erforderlich sind und somit Funktionserde auf das fünfte Kontaktelement gelegt werden kann. Der Anschluss über das Steckergehäuse ist in diesem Fall wiederum nicht erforderlich.

### Bezugszeichenliste

- 1: Bussystem
- 1': Busleitung
- 2: Kopplungsvorrichtung
- 3: Sicherheitsschalter
- 4: Sicherheitslichtschranke
- 5: Standardsensor
- 6: Kopplungsvorrichtung
- 7: busseitige Anschlusseinheit
- 8: geräteseitige Anschlusseinheit
- 9: Kontaktelement
- 10: Kontaktelement
- 11: Kontaktelement
- 12: Kontaktelement
- 13: Kontaktelement
- 14: Kontaktelement
- 15: Kontaktelement
- 16: Sicherheitsschalter
- 17: Sicherheitslichtschranke
- 18: testbarer Standardsensor
- 19: Signalausgang
- 20: Signalausgang
- 21: Ausgang
- 22: Kopplungsvorrichtung
- 22': Kopplungsvorrichtung
- 23: busseitige Anschlusseinheit
- 24: interne Steuereinheit
- 25: interne Steuereinheit
- 26: geräteseitige Anschlusseinheit
- 26': geräteseitige Anschlusseinheit
- 27: Kontaktelement
- 28: Kontaktelement
- 29: Kontaktelement
- 30: Kontaktelement
- 31: Kontaktelement
- 32: Kontaktelement
- 33: Verbindungsleitung
- 34: Verbindungsleitung
- 35: Verbindungsleitung
- 36: Verbindungsleitung
- 37: Verbindungsleitung
- 38: Verbindungsleitung
- 39: Kontaktelement
- 40: Kontaktelement
- 41: Kontaktelement
- 42: Kontaktelement
- 43: Kontaktelement

## Patentansprüche

1. Kopplungsvorrichtung zum Anschließen von Geräten (16, 17, 18) wie beispielsweise Sensoren, Aktoren, berührungslos wirkenden Schutzeinrichtungen, BWS, Lichtschranken oder Steuerungen an ein Bussystem (1), mit zumindest einer busseitigen Anschlusseinheit (23) zum Anschließen der Kopplungsvorrichtung (22, 22') an das Bussystem (1) und mit zumindest einer geräteseitigen Anschlusseinheit (26, 26') zum Anschließen eines Gerätes (16, 17, 18) an die Kopplungsvorrichtung (22, 22'), wobei die geräteseitige Anschlusseinheit (23) n, n>1, Kontaktelemente (27 - 32,39 - 43) umfasst, von denen jedes eine aus einer Menge von m, m> 1, vordefinierten Funktionseigenschaften (A, B, C, D, GND, FE) besitzt, zumindest ein Teil der Kontaktelemente als variable Kontaktelemente (27 - 30, 39 - 42) ausgebildet ist, die jeweils variabel mit je einer der vordefinierten Funktionseigenschaften (A, B, C, D) belegbar sind und innerhalb der Kopplungsvorrichtung (22, 22') zumindest eine interne Steuereinheit (24, 25) vorgesehen ist, über die die Zuordnung der Funktionseigenschaften (A, B, C, D) an die variablen Kontaktelemente (27 - 30) steuerbar ist
**dadurch gekennzeichnet,**
**dass** die Kopplungsvorrichtung (22, 22') **dadurch** zum Anschluss von Sicherheits-Geräten (16, 17) ausgebildet ist, dass die vordefinierten Funktionseigenschaften (A, B, C, D, GND, FE) aus einer Menge von Funktionseigenschaften ausgewählt sind, die grundsätzlich für den Einsatz der Sicherheits-Geräte (16, 17) erforderlich sind, wobei diese Menge von Funktionseigenschaften statische Versorgungsspannung, Potentialmasse, Signaleingang 1, Signaleingang 2, Test-/Schaltausgang 1, Test-/Schaltausgang 2 und Funktionserde umfasst,
die geräteseitige Anschlusseinheit (26, 26') als Standard-Anschluss zum Anschließen von Standard-Geräten (18) ausgebildet ist, wobei die Anzahl der Kontaktelemente (27 - 32,39 - 43) kleiner ist als die Anzahl der grundsätzlich für den Einsatz der Sicherheits-Geräte (16, 17) erforderlichen Funktionseigenschaften, und
die Steuereinheit (24, 25) ausgebildet ist, die Funktionseigenschaften den variablen Kontaktelementen (27 - 30) so zuzuordnen, dass die für ein anzuschließendes Sicherheits-Gerät (16, 17) tatsächlich erforderlichen Funktionseigenschaften, die weniger sind als die Menge der grundsätzlich für den Einsatz der Sicherheits-Geräte (16, 17) erforderlichen Funktionseigenschaften, auf die kleinere Zahl von Kontaktelementen (27 - 30, 39 - 42) des Standard-Anschlusses abgebildet werden.

2. Kopplungsvorrichtung nach Anspruch 1,
**dadurch gekennzeichnet,**
**dass** ein Teil der Kontaktelemente als feste Kontaktelemente (31, 32, 43) ausgebildet ist, die jeweils fest mit je einer vorgegebenen Funktionseigenschaft (GND, FE) belegt sind, während die restlichen Kontaktelemente (27 - 30, 39 - 42) jeweils variabel mit je einer Funktionseigenschaft (A, B, C, D) belegbar sind.

3. Kopplungsvorrichtung nach einem der vorhergehenden Ansprüche,
**dadurch gekennzeichnet,**
**dass** zumindest ein Teil der variablen Kontaktelemente (27 - 30, 39 - 42) jeweils mit der gleichen Funktionseigenschaft (A, B, C, D) belegbar ist.

4. Kopplungsvorrichtung nach einem der vorhergehenden Ansprüche,
**dadurch gekennzeichnet,**
**dass** zumindest einige der variablen Kontaktelemente (27 - 30, 39 - 42) mit voneinander verschiedenen Funktionseigenschaften (A, B, C, D) belegbar sind.

5. Kopplungsvorrichtung nach einem der vorhergehenden Ansprüche,
**dadurch gekennzeichnet,**
**dass** die Anzahl der geräteseitigen Kontaktelemente(37 - 32, 39 - 43) m größer, gleich oder kleiner als die Anzahl der vordefinierten Funktionseigenschaften (A, B, C; D) n ist.

6. Kopplungsvorrichtung nach einem der vorhergehenden Ansprüche,
**dadurch gekennzeichnet,**
**dass** die vordefinierten Funktionseigenschaften (A, B, C, D) aus folgenden Eigenschaften wählbar sind: Statische Versorgungsspannung (positiv oder negativ), Masse (GND), Signaleingang, Testausgang, Funktionserde, Schaltausgang, Signaleingang mit Pull-up-Widerstand, Signaleingang mit Pull-down-Widerstand, null Volt und keine Funktion.

7. Kopplungsvorrichtung nach einem der vorhergehenden Ansprüche,
**dadurch gekennzeichnet,**
**dass** eines der Kontaktelemente (32) als Gehäuseteil der geräteseitigen Anschlusseinheit (26, 26') ausgebildet ist.

8. Kopplungsvorrichtung nach einem der vorhergehenden Ansprüche,
**dadurch gekennzeichnet,**
**dass** die Kopplungsvorrichtung (22, 22') zum Anschluss an ein sicheres Bussystem (Sicherheitsbussystem) (1) ausgebildet ist.

9. Kopplungsvorrichtung nach einem der vorhergehenden Ansprüche,
**dadurch gekennzeichnet,**
**dass** die geräteseitige Anschlusseinheit (26') fünf Kontaktelemente (39 - 43) umfasst.

10. Kopplungsvorrichtung nach einem der Ansprüche 1 bis 8,
**dadurch gekennzeichnet,**
**dass** die geräteseitige Anschlusseinheit (26) sechs Kontaktelemente (27 - 32) umfasst, wobei eines der Kontaktelemente (32) als Gehäusekontakt, d.h. als Gehäuseteil der geräteseitigen Anschlusseinheit (26) ausgebildet ist.

11. Kopplungsvorrichtung nach Anspruch 10,
**dadurch gekennzeichnet,**
**dass** der Gehäusekontakt (32) fest mit Funktionserde FE belegt ist.

12. Kopplungsvorrichtung nach einem der vorhergehenden Ansprüche,
**dadurch gekennzeichnet,**
**dass** ein festes Kontaktelement (29) als erster Signaleingang (IN1), ein festes Kontaktelement (30) als zweiter Signaleingang (IN2) und ein festes Kontaktelement (31) als Masse (GND) fest eingestellt ist, während zwei variable Kontaktelemente jeweils variabel als erster oder zweiter Testausgang (TOUT1, TOUT2) einstellbar oder mit statischer Versorgungsspannung oder mit 0 V belegbar sind.

13. Kopplungsvorrichtung nach einem der Ansprüche 1 bis 11,
**dadurch gekennzeichnet,**
**dass** ein festes Kontaktelement (31) als Masse (GND) fest eingestellt ist, während jeweils zwei variable Kontaktelemente (27, 28) als erster und zweiter Testausgang (TOUT1H, TOUT2H) und zwei weitere variable Kontaktelemente (29, 30) als jeweils low-aktiver erster und zweiter Schaltausgang (TOUT1L, TOUT2L) einstellbar sind.

14. Kopplungsvorrichtung nach einem der Ansprüche 1 bis 11,
**dadurch gekennzeichnet,**
**dass** ein festes Kontaktelement (27) als erster Schaltausgang (TOUT1H), ein festes Kontaktelement (28) als zweiter Schaltausgang (TOUT2H) und ein festes Kontaktelement (31) als Masse (GND) fest eingestellt ist, während zwei variable Kontaktelemente (29, 30) jeweils variabel als erster und zweiter Signaleingang (IN1, IN2) oder als jeweils low-aktiver erster und zweiter Schaltausgang (TOUT1L, TOUT2L) einstellbar sind.

15. Kopplungsvorrichtung nach einem der Ansprüche 1 bis 11,
**dadurch gekennzeichnet,**
**dass** ein festes Kontaktelement (31) fest mit Masse (GND) belegt ist, während vier variable Kontaktelemente (27 - 30) jeweils variabel als beliebige Kombination von Signaleingängen (IN1, IN2) und Schaltausgängen (TOUT1, TOUT2) einstellbar sind.

16. Kopplungsvorrichtung nach einem der Ansprüche 1 bis 11,
**dadurch gekennzeichnet,**
**dass** ein festes Kontaktelement (43) fest mit Funktionserde (FE) belegt ist, während vier variable Kontaktelemente (39 - 42) jeweils variabel als beliebige Kombination von Signaleingängen (IN1, IN2), Schaltausgängen (TOUT1, TOUT2), Masse (GND) und statischer Versorgungsspannung einstellbar sind.

17. Kopplungsvorrichtung nach einem der Ansprüche 1 bis 11,
**dadurch gekennzeichnet,**
**dass** ein festes Kontaktelement (43) fest mit Funktionserde (FE), ein festes Kontaktelement (42) mit Masse (GND) und ein festes Kontaktelement (39) mit statischer Versorgungsspannung fest belegt ist, während zwei variable Kontaktelemente (40, 41) jeweils variabel als Signaleingänge mit Pull-up-Widerstand oder mit Pull-down-Widerstand (IN1-pu, IN2-pu, IN1-pd, IN2-pd) einstellbar sind.

18. Kopplungsvorrichtung nach einem der Ansprüche 1 bis 11,
**dadurch gekennzeichnet,**
**dass** ein festes Kontaktelement (43) fest mit Funktionserde (FE), ein festes Kontaktelement (42) mit Masse (GND), ein festes Kontaktelement (39) mit statischer Versorgungsspannung und ein festes Kontaktelement (40) als Signaleingang mit Pull-down-Widerstand (IN1-pd) fest belegt ist, während ein variables Kontaktelement (41) variabel als Signaleingang mit Pull-up-Widerstand (IN2-pu) oder als Signaleingang mit Pull-down-Widerstand (IN2-pd) einstellbar ist.

19. Kopplungsvorrichtung nach einem der vorhergehenden Ansprüche,
**dadurch gekennzeichnet,**
**dass** die interne Steuereinheit (24, 25) ein Softwaresteuermodul umfasst.

20. Kopplungsvorrichtung nach einem der vorhergehenden Ansprüche
**dadurch gekennzeichnet,**
**dass** zur Belegung der variablen Kontaktelemente (27 - 30) eine externe Steuereinheit, insbesondere ein Personalcomputer anschließbar ist, über die die interne(n) Steuereinheit(en) (24, 25) ansteuerbar ist/sind.

21. Kopplungsvorrichtung nach Anspruch 20,
**dadurch gekennzeichnet,**
**dass** ein separater Steueranschluss zum Anschließen der externen Steuereinheit an die Kopplungsvorrichtung vorgesehen ist.

22. Kopplungsvorrichtung nach Anspruch 20 oder 21,
**dadurch gekennzeichnet,**
**dass** Steuerdaten von der externen Steuereinheit über das Bussystem (1) und die busseitige Anschlusseinheit (23) an die Kopplungsvorrichtung (22, 22') übertragbar sind.

23. Kopplungsvorrichtung nach einem der vorhergehenden Ansprüche,
**dadurch gekennzeichnet,**
**dass** die geräteseitige Anschlusseinheit als fünfpoliger Steckverbinder oder als fünfpoliger Steckverbinder mit Gehäusekontakt als sechstem Pol ausgebildet ist.

24. Kopplungsvorrichtung nach Anspruch 23,
**dadurch gekennzeichnet,**
**dass** die geräteseitige Anschlusseinheit als M12 5-poliger Rundsteckverbinder oder als M12 5-poliger Rundsteckverbinder mit Gehäuseabschirmung ausgebildet ist.

25. Kopplungsvorrichtung nach einem der vorhergehenden Ansprüche,
**dadurch gekennzeichnet,**
**dass** zur Erzeugung einer sicheren Kopplungsvorrichtung (22, 22') zwei redundante interne Steuereinheiten (24, 25) vorgesehen sind.

## Claims

1. A coupling apparatus for the connection of devices (16, 17, 18) such as sensors, actuators, protection devices acting in a contact free manner, electro-sensitive equipment (ESPE), light barriers or controls to a bus system (1), having at least one connection unit (23) at the bus side for the connection of the coupling apparatus (22, 22') to the bus system (1) and having at least one connection unit (26, 26') at the device side for the connection of a device (16, 17, 18) to the coupling apparatus (22, 22'), wherein the connection unit (23) at the device side includes n, n>1, contact elements (27 - 32, 39 - 43) of which each has one predefined functional property from a set of m, m>1, predefined functional properties (A, B, C, D, GND, FE), wherein at least some of the contact elements are made as variable contact elements (27 - 30, 39 - 42) to each of which one of the predefined functional properties (A, B,C, D) can be variably assigned, and wherein at least one internal control unit (24, 25) is provided inside the coupling apparatus (22, 22') and the assignment of the functional properties (A, B, C, D) to the variable contact elements (27 - 30) can be controlled via said internal control unit,
**characterized in that**
the coupling apparatus (22, 22') is designed for the connection of security devices (16, 17); **in that** the predefined functional properties (A, B, C, D, GND, FE) are selected from a set of functional properties which are basically required for the use of the security devices (16, 17), said set of functional properties including static supply voltage, potential mass, signal input 1, signal input 2, test/ switch output 1, test/ switch output 2 and functional earth; **in that** the connection unit (26, 26') at the device side is made as a standard connection for the connection of standard devices (18), with the number of the contact elements (27 - 32, 39 - 43) being smaller than the number of the functional properties basically required for the use of the security devices (16, 17); and **in that** the control unit (24, 25) is made to assign the functional properties to the variable contact elements (27 - 30) such that the functional properties which are actually required for a security device (16, 17) to be connected and which are fewer than the set of the functional properties basically required for the use of the safety devices (16, 17) are mapped to the smaller number of contact elements (27 - 30, 39 - 42) of the standard connection.

2. A coupling apparatus in accordance with claim 1, **characterized in that** some of the contact elements are made as fixed contact elements (31, 32, 43) to each of which are fixedly assigned one predetermined functional property (GND, FE), whereas any one functional property (A, B, C, D) can be assigned to the remaining variable contact elements (27 - 30, 39 - 42).

3. A coupling apparatus in accordance with any one of the preceding claims, **characterized in that** at least some of the variable contact elements (27 - 30,39 - 42) can each be assigned the same functional property (A, B, C, D).

4. A coupling apparatus in accordance with any one of the preceding claims, **characterized in that** at least some of the variable contact elements (27 - 30, 39 - 42) can be assigned functional properties (A, B, C, D) different from one another.

5. A coupling apparatus in accordance with any one of the preceding claims, **characterized in that** the number m of the contact elements (37 - 32, 39 - 43) at the device side is larger than, equal to or smaller than the number n of the predefined functional properties (A, B, C, D).

6. A coupling apparatus in accordance with any one of the preceding claims, **characterized in that** the predefined functional properties (A, B, C, D) can be selected from the following properties: static supply voltage (positive or negative), ground (GND), signal input, test output, functional earth, switch output, signal input with pull-up resistance, signal input with pull-down resistance, zero volts and no function.

7. A coupling apparatus in accordance with any one of the preceding claims, **characterized in that** one of the contact elements (32) is made as a housing part of the connection unit (26, 26') at the device side.

8. A coupling apparatus in accordance with any one of the preceding claims, **characterized in that** the coupling apparatus (22, 22') is made for the connection to a secure bus system (security bus system) (1).

9. A coupling apparatus in accordance with any one of the preceding claims, **characterized in that** the connection unit (26') at the device side includes five contact elements (39 - 43).

10. A coupling apparatus in accordance with any one of the claims 1 to 8, **characterized in that** the connection unit (26) at the device side includes six contact elements (27 - 32), with one of the contact elements (42) being formed as a housing contact, i.e. as a housing part of the connection unit (26) at the device side.

11. A coupling apparatus in accordance with claim 10, **characterized in that** a functional earth FE is fixedly assigned to the housing contact (32).

12. A coupling apparatus in accordance with any one of the preceding claims, **characterized in that** a fixed contact element (29) is fixedly set as a first signal input (IN1), a fixed contact element (30) as a second signal input (IN2) and a fixed contact element (3) as ground (GND), whereas two variable contact elements can each be variably set as the first or second test outputs (TOUT1, TOUT2) or can have a static supply voltage or 0 V assigned to them.

13. A coupling apparatus in accordance with any one of the claims 1 to 11, **characterized in that** a fixed contact element (31) is fixedly set as ground (GND), whereas two variable contact elements (27, 28) can be respectively set as the first and second test outputs (TOUT1H, TOUT2H) and two further variable contact elements (29, 30) can be set as respective low-active first and second switch outputs (TOUT1L, TOUT2L).

14. A coupling apparatus in accordance with any one of the claims 1 to 11, **characterized in that** a fixed contact element (27) is fixedly set as a first switch output (TOUT1H), a fixed contact element (28) as a second switch output (TOUT2H) and a fixed contact element (31) as ground (GND), whereas two variable contact elements (29, 30) can be variably set as respective first and second signal inputs (IN1, IN2) or as respective low-active first and second switch outputs (TOUT1L, TOUT2L).

15. A coupling apparatus in accordance with any one of the claims 1 to 11, **characterized in that** ground (GND) is fixedly assigned to a fixed contact element (31), whereas four variable contact elements (27-30) can respectively be variably set as any desired combination of signal inputs (IN1, IN2) and switch outputs (TOUT1, TOUT2).

16. A coupling apparatus in accordance with any one of the claims 1 to 11, **characterized in that** functional earth (FE) is fixedly assigned to a fixed contact element (43), whereas four variable contact elements (39 - 42) can respectively be variably set as any desired combination of signal inputs (IN1, IN2), switch outputs (TOUT1, TOUT2), ground (GND) and a static supply voltage.

17. A coupling apparatus in accordance with any one of the claims 1 to 11, **characterized in that** functional earth (FE) is fixedly assigned to a fixed contact element (43), ground (GND) to a fixed contact element (42) and a static supply voltage to a fixed contact element (39), whereas two variable contact elements (40, 41) can respectively be variably set as signal inputs with a pull-up resistance or with a pull-down resistance (IN1-pu, IN2-pu, IN1-pd, IN2-pd).

18. A coupling apparatus in accordance with any one of the claims 1 to 11, **characterized in that** functional earth (FE) is fixedly assigned to a fixed contact element (43), ground (GND) to a fixed contact element (42), a static supply voltage to a fixed contact element (39) and a signal input with pull-down resistance (IN1-pd) to a fixed contact element (40), whereas a variable contact element (41) can be variably set as a signal input with a pull-up resistance (IN2-pu) or as a signal input with a pull-down resistance (IN2-pd).

19. A coupling apparatus in accordance with any one of the preceding claims, **characterized in that** the internal control unit (24, 25) includes a software control module.

20. A coupling apparatus in accordance with any one of the preceding claims, **characterized in that** an external control unit, in particular a personal computer, via which the internal control unit(s) (24, 25) is/are controllable, can be connected for the assignment of the variable contact elements (27-30).

21. A coupling apparatus in accordance with claim 20, **characterized in that** a separate control connection is provided for the connection of the external control unit to the coupling apparatus.

22. A coupling apparatus in accordance with claim 20 or claim 21, **characterized in that** control data can be transmitted from the external control unit via the bus system (1) and via the connection unit (23) at the bus side to the coupling apparatus (22, 22').

23. A coupling apparatus in accordance with any one of the preceding claims, **characterized in that** the connection unit at the device side is designed as a five pin plug connector or as a five pin plug connector with a housing contact as a sixth pin.

24. A coupling apparatus in accordance with claim 23, **characterized in that** the connection unit at the device side is designed as an M12 5-pin round plug connector or as an M12 5-pin round plug connector with housing shield.

25. A coupling apparatus in accordance with any one of the preceding claims, **characterized in that** two redundant internal control units (24, 25) are provided for the production of a secure coupling apparatus (22, 22').

## Revendications

1. Dispositif de couplage pour connecter des appareils (16, 17, 18) tels que par exemple des capteurs, des acteurs, des dispositifs de protection agissant sans contact (BWS), des barrières lumineuses ou des commandes à un système de bus (1), comportant au moins une unité de connexion (23) côté bus pour connecter le dispositif de couplage (22, 22') au système de bus (1) et comportant au moins une unité de connexion (26, 26') côté appareil pour connecter un appareil (16, 17, 18) au dispositif de couplage (22, 22'), l'unité de connexion (23) côté bus comprenant n, n>1, éléments de contact (27 - 32, 39 - 43), dont chacun possède une propriété fonctionnelle (A, B, C, D, GND, FE) prédéfinie à partir d'un ensemble de m, m>1, au moins une partie des éléments de contact étant réalisée sous forme d'éléments de contact variables (27 - 30, 39 - 42) qui peuvent chacun être occupés de façon variable par une des propriétés fonctionnelles (A, B, C, D) prédéfinies, et à l'intérieur du dispositif de couplage (22, 22') est prévue au moins une unité de commande interne (24, 25) via laquelle peut être commandée l'attribution des propriétés fonctionnelles (A, B, C, D) aux éléments de contact (27-30) variables, **caractérisé en ce que**
le dispositif de couplage (22, 22') est réalisé pour la connexion d'appareils de sécurité (16, 17) par le fait que les propriétés fonctionnelles (A, B, C, D, GND, FE) prédéfinies sont choisies parmi un ensemble de propriétés fonctionnelles qui sont en principe nécessaires pour la mise en oeuvre d'appareils de sécurité (16, 17), cet ensemble de propriétés fonctionnelles comprenant la tension d'alimentation statique, la masse de potentiel, l'entrée de signal 1, l'entrée de signal 2, la sortie de test/commutation 1, la sortie de test/commutation 2 et la terre de fonction,
l'unité de connexion (26, 26') côté appareil est réalisée en tant que connexion standard pour connecter des appareils standard (18), le nombre d'éléments de contact (27 - 32, 39 - 43) étant plus petit que le nombre des propriétés fonctionnelles fondamentalement nécessaires pour la mise en oeuvre des appareils de sécurité (16, 17), et
l'unité de commande (24, 25) étant réalisée pour associer les propriétés fonctionnelles aux éléments de contact (27 - 30) variables de telle sorte que les propriétés fonctionnelles réellement nécessaires pour un appareil de sécurité (16, 17) à connecter, qui sont inférieures à l'ensemble des propriétés fonctionnelles fondamentalement nécessaires pour la mise en oeuvre des appareils de sécurité (16, 17), sont reproduites sur le plus petit nombre d'élément de contact (27 - 30, 39 - 42) de la connexion standard.

2. Dispositif de couplage selon la revendication 1,
**caractérisé en ce que**
une partie des éléments de contact sont réalisés sous forme d'éléments de contact (31, 32, 43) fixes qui sont chacun occupés de façon fixe avec une propriété fonctionnelle (GND, FE) respective prédéterminée, tandis que le reste des éléments de contact (27 - 30, 39 - 42) peuvent chacun être occupés de façon variable avec une propriété fonctionnelle (A, B, C, D) respective.

3. Dispositif de couplage selon l'une quelconque des revendications précédentes, **caractérisé en ce que**
au moins une partie des éléments de contact (27 - 30, 39 - 42) variables peuvent chacun être occupés avec la même propriété fonctionnelle (A, B, C, D).

4. Dispositif de couplage selon l'une quelconque des revendications précédentes, **caractérisé en ce que**
au moins certains des éléments de contact (27 - 30, 39 - 42) variables peuvent être occupés avec des propriétés fonctionnelles (A, B, C, D) différentes les unes des autres.

5. Dispositif de couplage selon l'une quelconque des revendications précédentes, **caractérisé en ce que**
le nombre des éléments de contact (37 - 32, 39 - 43) est de m plus grand, égal ou plus petit que le nombre des propriétés fonctionnelles (A, B, C, D)n.

6. Dispositif de couplage selon l'une quelconque des revendications précédentes, **caractérisé en ce que**
les propriétés fonctionnelles (A, B, C, D) prédéfinies peuvent être choisies parmi les propriétés suivantes : tension d'alimentation statique (positive ou négative), masse (GND), entrée de signal, sortie de test, terre de fonction, sortie de commutation, entrée de signal avec résistance d'excursion haute, entrée de signal avec résistance d'excursion basse, zéro volt et aucune fonction.

7. Dispositif de couplage selon l'une quelconque des revendications précédentes, **caractérisé en ce que**
un des éléments de contact (32) est réalisé sous forme de partie de boîtier de l'unité de connexion (26, 26') côté appareil.

8. Dispositif de couplage selon l'une quelconque des revendications précédentes, **caractérisé en ce que**
le dispositif de couplage (22, 22') est réalisé pour être connecté à un système de bus sûr (système de bus de sécurité) (1).

9. Dispositif de couplage selon l'une quelconque des revendications précédentes, **caractérisé en ce que**
l'unité de connexion (26') côté appareil comprend cinq éléments de contact (39-43)

10. Dispositif de couplage selon l'une quelconque des revendications 1 à 8, **caractérisé en ce que**
l'unité de connexion (26) côté appareil comprend six éléments de contact (27 - 32), un des éléments de contact (32) étant réalisé en tant que contact de boîtier, c'est-à-dire en tant que partie de boîtier de l'unité de connexion (26) côté appareil.

11. Dispositif de couplage selon la revendication 10,
**caractérisé en ce que**
le contact de boîtier (32) est occupé de façon fixe avec la terre de fonction FE.

12. Dispositif de couplage selon l'une quelconque des revendications précédentes, **caractérisé en ce que**
un élément de contact (29) fixe est réglé de façon fixe en tant que première entrée de signal (IN1), un élément de contact (30) fixe en tant qu'entrée de signal (IN2), et un troisième élément de contact (31) fixe en tant que masse (GND), tandis que deux éléments de contact variables peuvent être chacun réglés de façon variable en tant que première ou deuxième sortie de test (TOUT1, TOUT2) ou occupés avec une tension d'alimentation statique ou avec 0 V.

13. Dispositif de couplage selon l'une quelconque des revendications 1 à 11, **caractérisé en ce que**
un élément de contact (31) fixe est réglé de façon fixe en tant que masse (GND), tandis que deux éléments de contact (27, 28) variables peuvent être réglés en tant que première et deuxième sortie de test (TOUT1H, TOUT2H), et deux autres éléments de contact (29, 30) variables peuvent être réglés chacun en tant que première et deuxième sortie de commutation activement basse (TOUT1L, TOUT2L).

14. Dispositif de couplage selon l'une quelconque des revendications 1 à 11, **caractérisé en ce que**
un élément de contact (27) fixe est réglé de façon fixe en tant que première sortie de commutation (TOUT1H), un élément de contact (28) fixe est réglé de façon fixe en tant que deuxième sortie de commutation (TOUT2H) et un élément de contact (31) fixe est réglé de façon fixe en tant que masse (GND), tandis que deux éléments de contact (29, 30) variables peuvent être réglés chacun de façon variable en tant que première et deuxième entrée de signal (IN1, IN2) ou en tant que première et deuxième sortie de commutation (TOUT1L, TOUT2L) activement basse.

15. Dispositif de couplage selon l'une quelconque des revendications 1 à 11, **caractérisé en ce que**
un élément de contact (31) fixe est occupé de façon fixe avec la masse (GND), tandis que quatre éléments de contact (27 - 30) variables peuvent être chacun réglés de façon variable en tant que combinaison quelconque d'entrées de signal (IN1, IN2) et de sorties de commutation (TOUT1, TOUT2).

16. Dispositif de couplage selon l'une quelconque des revendications 1 à 11, **caractérisé en ce que**
un élément de contact (43) fixe est occupé par la terre de fonction (FE), tandis que quatre éléments de contact (39 - 42) variables peuvent être chacun réglés de façon variable en tant que combinaison quelconque d'entrées de signal (IN1, IN2) et de sorties de commutation (TOUT1, TOUT2), de masse (GND) et de tension d'alimentation statique.

17. Dispositif de couplage selon l'une quelconque des revendications 1 à 11, **caractérisé en ce que**
un élément de contact (43) fixe est occupé de façon fixe avec la terre de fonction (FE), un élément de contact (42) fixe est occupé de façon fixe avec la masse (GND), et un élément de contact (39) fixe est occupé de façon fixe avec une tension d'alimentation statique, tandis que deux éléments de contact (40, 41) variables peuvent être réglés de façon variable en tant qu'entrées de signal avec résistance d'excursion haute ou avec résistance d'excursion basse (IN1-pu, IN2-pu, IN1-pd, IN2-pd).

18. Dispositif de couplage selon l'une quelconque des revendications 1 à 11, **caractérisé en ce que**
un élément de contact (43) fixe est occupé de façon fixe avec la terre de fonction (FE), un élément de contact (42) fixe est occupé de façon fixe avec la masse (GND), et un élément de contact (39) fixe est occupé de façon fixe avec une tension d'alimentation statique, et un élément de contact (40) fixe est occupé de façon fixe en tant qu'entrée de signal avec résistance d'excursion basse (IN1-pd), tandis qu'un élément de contact (41) variable peut être réglé de façon variable en tant qu'entrée de signal avec résistance d'excursion haute (IN2-pu),ou en tant qu'entrée de signal avec résistance d'excursion basse (IN2-pd).

19. Dispositif de couplage selon l'une quelconque des revendications précédentes, **caractérisé en ce que**
l'unité de commande (24, 25) interne comprend un module de commande de logiciel.

20. Dispositif de couplage selon l'une quelconque des revendications précédentes, **caractérisé en ce que**
pour occuper les éléments de contact (27 - 30) variables peut être connectée une unité de commande externe, en particulier un ordinateur personnel, via lequel l'unité/les unité de commande interne(s) (24, 25) peut/peuvent être pilotée(s).

21. Dispositif de couplage selon la revendication 20,
**caractérisé en ce que**
une connexion de commande séparée est prévue pour connecter l'unité de commande externe au dispositif de couplage.

22. Dispositif de couplage selon la revendication 20 ou 21,
**caractérisé en ce que**
des données de commande peuvent être transmises par l'unité de commande externe via le système de bus (1) et l'unité de connexion (23) côté bus au dispositif de couplage (22, 22').

23. Dispositif de couplage selon l'une quelconque des revendications précédentes, **caractérisé en ce que**
l'unité de connexion côté appareil est réalisée en tant que connecteur à cinq pôles ou en tant que connecteur à cinq pôles avec contact de boîtier en tant que sixième pôle.

24. Dispositif de couplage selon la revendication 23,
**caractérisé en ce que**
l'unité de connexion côté appareil est réalisée en tant que connecteur rond M12 à cinq pôles ou en tant que connecteur rond M12 à cinq pôles avec blindage de boîtier.

25. Dispositif de couplage selon l'une quelconque des revendications précédentes, **caractérisé en ce que**
pour engendrer un dispositif de couplage (22, 22') sûr sont prévues deux unités de commande (24, 25) internes redondantes.
